# EUROPEAN PATENT SPECIFICATION

(11) **EP 4 483 566 B1**
(45) Date of publication and mention of the grant of the patent: **06.08.2025**
(21) Application number: 22717769.8
(22) Date of filing: 23.03.2022
(51) Int. Cl.: H04L 69/04

(54) **SYSTEM, METHOD AND COMPUTER-PROGRAM PRODUCT FOR INCREASING AVAILABLE AIRTIME IN WI-FI NETWORKS**
SYSTEM, VERFAHREN UND COMPUTERPROGRAMMPRODUKT ZUR ERHÖHUNG DER VERFÜGBAREN FUNKZEIT IN WIFI-NETZWERKEN
SYSTÈME, PROCÉDÉ ET PRODUIT PROGRAMME D'ORDINATEUR POUR AUGMENTER LE TEMPS DISPONIBLE DANS DES RÉSEAUX WI-FI

(30) Priority: 22.02.2022 ES 202230141
(43) Date of publication of application: 01.01.2025
(73) Proprietor: GALGUS GLOBAL, S.R.L., 46010 Valencia (ES)
(72) Inventor: AGUILERA BONET, Pablo, 46010 Valencia (ES); FERNÁNDEZ MANZANO, Jesús, 46010 Valencia (ES); PÉREZ HERNÁNDEZ, Abraham, 46010 Valencia (ES); GONZÁLEZ GARRIDO, José Ayub, 46010 Valencia (ES); DELGADO ALONSO, José Antonio, 46010 Valencia (ES)
(74) Representative: Clarke, Modet y Cía., S.L.
(86) International application number: PCT/EP2022/057575
(87) International publication number: WO 2023/160829

(56) References cited:
- US-A1- 2014 010 223
- US-A1- 2014 192 809
- US-A1- 2014 241 226

## Description

### Field of the Invention

The present disclosure relates to methods and systems for improving the quality of service (QoS) and reducing interferences or collisions in Wi-Fi networks.

### Background of the Invention

The management frames in Wi-Fi networks (IEEE 802.11) are frames used to establish a successful association between the access points and the stations (or client devices) of the Wi-Fi network. The management frames may be, among others, a Beacon frame, a Probe Request frame, a Probe Response frame, an Association Request frame, an Association Response frame, an Authentication Request frame and an Authentication Response frame. Given their importance, they are transmitted at a minimum rate (normally 6 Mbps), maximum power and great redundancy at the physical level (1 out of every 2 bits is redundant in case data is lost). For instance, the Beacon frame is constantly transmitted every 0.1 seconds as long as the access point is powered on. Document US 2014/241226 A1 discloses: in response to receiving a beacon-poll frame, a wireless AP transmits a unicast beacon frame to an STA, thereby eliminating the need for the STA to periodically wake up to receive broadcast beacon frames from the AP.

The redundancy and minimum transmission rate of the management frames poses a problem, since a significant portion of airtime (or transmission time) is wasted on management frames, which reduces the quality of service (QoS) and generates interferences or collisions in Wi-Fi networks. The present invention aims to solve this problem.

### Description of the Invention

The present invention refers to a system and method for increasing available airtime in Wi-Fi networks.

The method aims to improve the quality of service (QoS) and reduce collisions in Wi-Fi networks, by improving airtime availability in the Wi-Fi network. The method is based on compression and decompression of the management frames (such as Beacon frames or Probe Request frames) to reduce the airtime occupied by these frames. For instance, access points emit several Beacon frames every 0.1 seconds continuously, and the airtime dedicated to these frames cannot be used to transmit other important data.

The method for increasing available airtime in Wi-Fi networks comprises the following steps:
- Generating, by a first Wi-Fi device, a management frame.
- Compressing, by the first Wi-Fi device, the management frame to obtain a compressed management frame.
- Wirelessly broadcasting, by the first Wi-Fi device, the compressed management frame.
- Receiving, at a second Wi-Fi device, the compressed management frame.
- Decompressing, by the second Wi-Fi device, the compressed management frame to obtain the management frame generated by the first Wi-Fi device.

According to another aspect of the present invention, a system for increasing available airtime in Wi-Fi networks is herein provided. The system comprises one or more first Wi-Fi devices and one or more second Wi-Fi devices. Each first Wi-Fi device comprises a data processing unit configured to generate a management frame and compress the management frame to obtain a compressed management frame, and a radio transmitter unit configured to broadcast the compressed management frame. Each second Wi-Fi device comprises a radio receiver unit configured to receive the compressed management frame and a data processing unit configured to decompress the compressed management frame to obtain the management frame generated by the first Wi-Fi device.

Another aspect of the present invention refers to a Wi-Fi transmitter device for increasing available airtime in Wi-Fi networks. The Wi-Fi transmitter device comprises a data processing unit configured to generate an IEEE 802.11 management frame and compress the management frame to obtain a compressed management frame, and a radio transmitter unit configured to transmit the compressed management frame to a Wi-Fi receiver device.

Another aspect of the present invention refers to a Wi-Fi receiver device for increasing available airtime in Wi-Fi networks. The Wi-Fi receiver device comprises a radio receiver unit configured to receive a compressed management frame from a Wi-Fi transmitter device, and a data processing unit configured to decompress the compressed management frame to obtain an IEEE 802.11 management frame.

The present invention also refers to a computer program product comprising instructions which, when the program is executed by a first processor, cause the first processor to generate an IEEE 802.11 management frame, compress the management frame to obtain a compressed management frame, and transmit the compressed management frame to a second processor.

The present invention also refers to a computer program product comprising instructions which, when the program is executed by a second processor, cause the second processor to receive a compressed management frame from a first processor and decompress the compressed management frame to obtain an IEEE 802.11 management frame.

### Brief Description of the Drawings

A series of drawings which aid in better understanding the invention and which are expressly related with an embodiment of the said invention, presented as a non-limiting example thereof, are very briefly described below.
Figure 1 represents a flow diagram of a method for increasing available airtime in Wi-Fi networks according to an embodiment of the present invention.
Figure 2 shows the structure of an IEEE 802.11 Beacon frame.
Figure 3 illustrates the content and fields of a Beacon frame.
Figure 4 is a table representing the percentage of airtime occupied by Beacon frames, as a function of number of SSIDs AP advertised by each access point per channel (columns) and number of access points on each channel (rows).
Figure 5 illustrates the compression and decompression process of management frames performed at a first Wi-Fi device and a second Wi-Fi device, according to the method of the present invention.
Figure 6 depicts, as an example, the sequence of bits forming a field of a Beacon frame.
Figure 7 depicts the sequence of bytes forming a complete Beacon frame.
Figure 8 shows, using the table of Figure 4, the reduction in airtime occupied by Beacon frames produced by the present invention.
Figure 9A depicts the tagged parameters highlighted on the Beacon frame of Figure 7.
Figure 9B depicts the sequence of bytes forming a complete Probe Request frame, with its tagged parameters highlighted.
Figure 10 depicts an embodiment of a system for increasing available airtime in Wi-Fi networks.

### Description of a Preferred Embodiment of the Invention

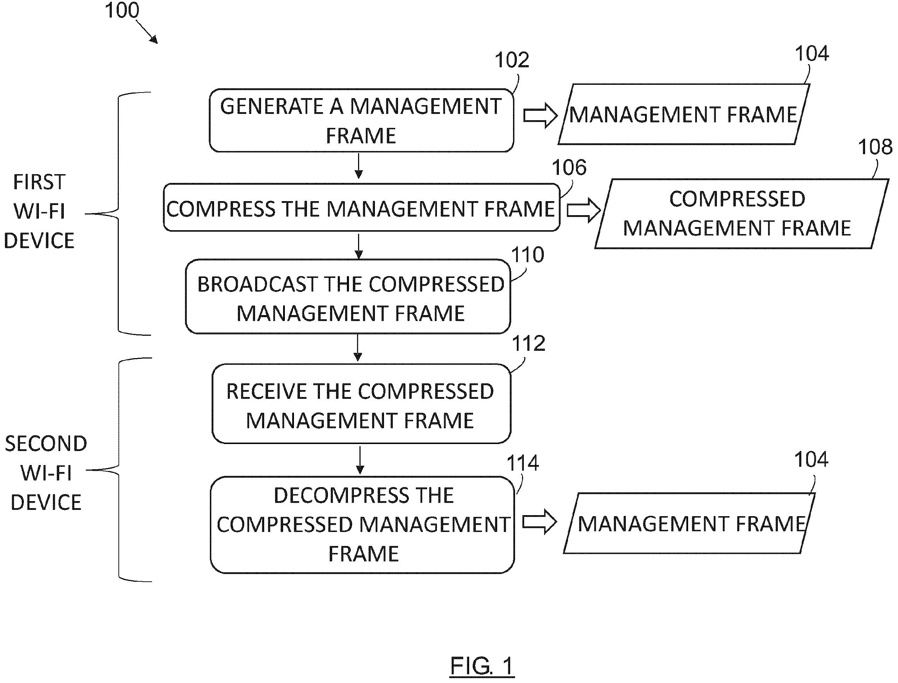

The present invention refers to a method for increasing available airtime in Wi-Fi networks. A flow diagram with the steps of the method 100 is depicted in **Figure** 1. The method comprises the following steps: generating 102, by a first Wi-Fi device, a management frame 104; compressing 106, by the first Wi-Fi device, the management frame 104 to obtain a compressed management frame 108; wirelessly broadcasting 110, by the first Wi-Fi device, the compressed management frame 108; receiving 112, at a second Wi-Fi device, the compressed management frame 108; and decompressing 114, by the second Wi-Fi device, the compressed management frame to obtain the management frame 104 which was initially generated by the first Wi-Fi device.

The method is preferably applied to IEEE 802.11 management frames that are long and more frequently broadcast.

In an embodiment, the management frame is a Beacon frame, the first Wi-Fi device is an access point, and the second Wi-Fi device is a station (i.e. a client device, such as a smartphone, that connects to the Wi-Fi network created by an access point). Beacon frames are long messages that are constantly broadcast (normally at a rate of ten or more times per second).

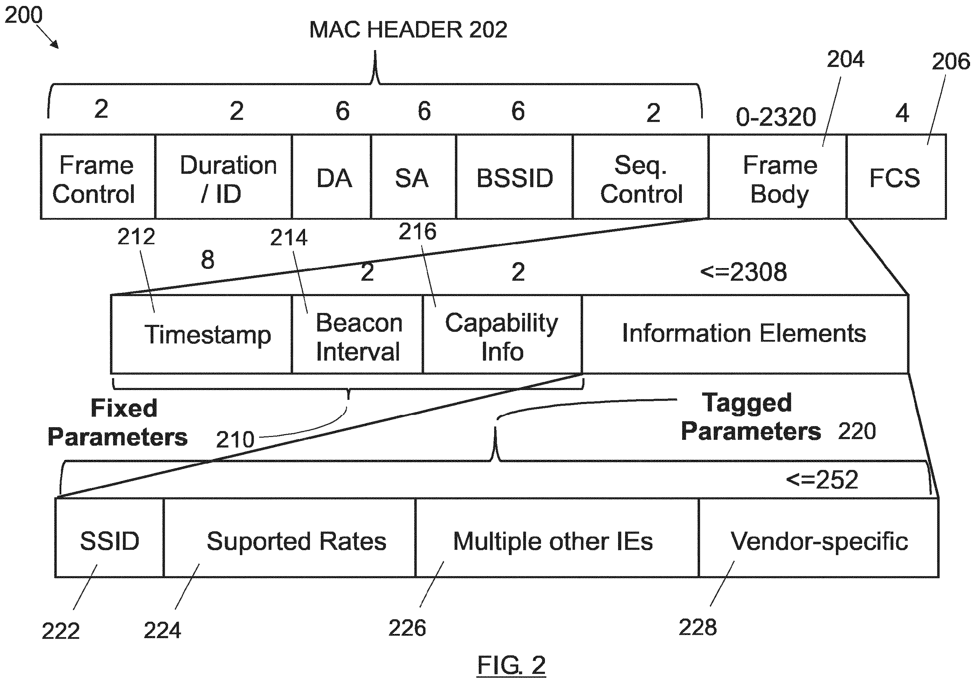

The vast majority of the weight of the management frame is contained in the frame body, which has a fixed part (which is normally small) and a variable part (which includes the so-called "Information Elements" or "Tagged Parameters"). **Figure 2** illustrates the structure of a Beacon frame 200, which consists of a MAC header 202, a frame body 204 and a frame check sequence (FCS) 206. The frame body 204 comprises a plurality of fixed parameters 210 and tagged parameters 220 (or information elements). The fixed parameters 210 include the following fields: a timestamp 212, a beacon interval 214 (time interval between beacon transmissions) and capability information 216 of the device/network. The extension of the tagged parameters 220 is variable and may include different optional fields, such as SSID 222, supported rates 224, other information elements 226 and vendor-specific fields 228. The number of bytes that each field may contain are shown above the field.

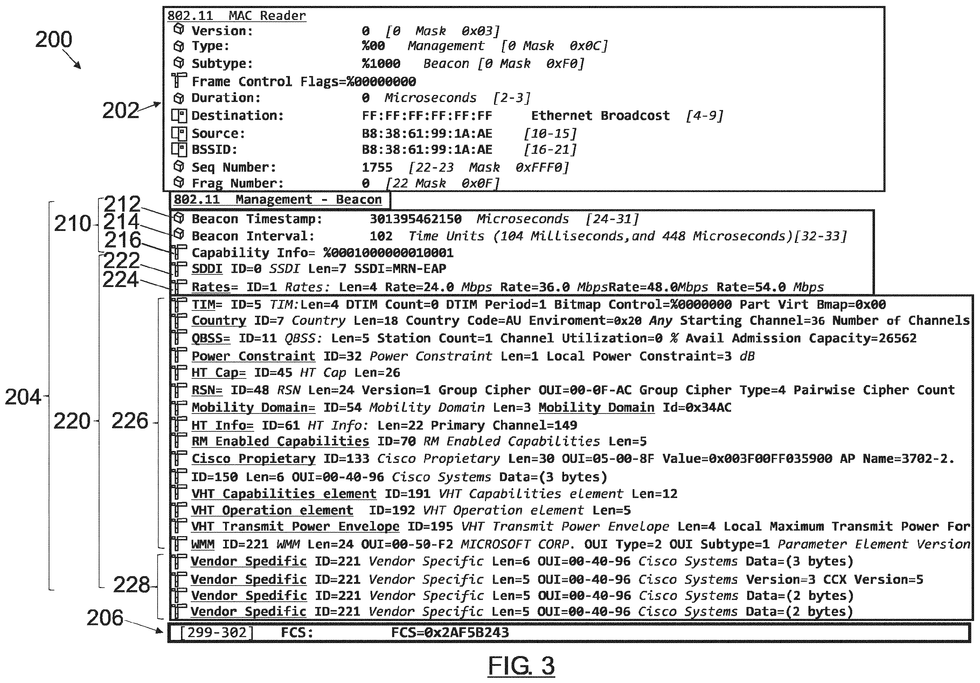

**Figure 3** is an example of a captured Beacon frame showing the different fields of Figure 2. The extension of the beacon frame 200 is mostly determined by the extension of the tagged parameters 220, which may occupy up to 98% of the beacon frame size.

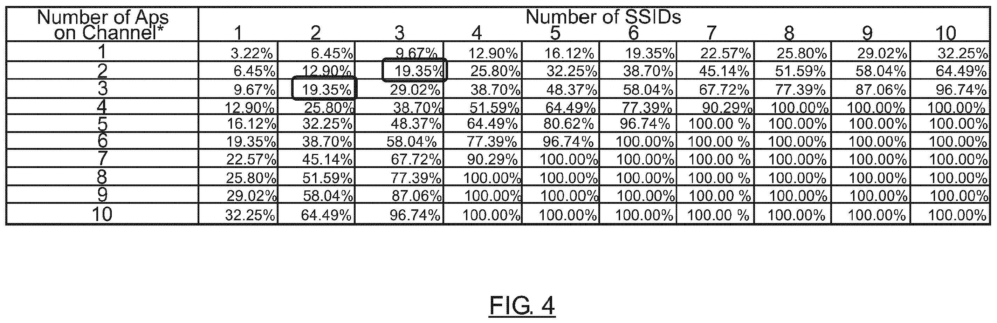

Each access point (AP) periodically transmits, for each SSID (Service Set IDentifier), a Beacon frame with multiple parameters that describe the network, the supported rates, the capabilities of the access point, the security options, etc. Each SSID is a network name to which each a station or client device (smartphone, tablet, laptop, etc.) can connect. **Figure 4** depicts the percentage of total airtime occupied by all the beacon frames transmitted on a channel depending on the number of SSIDs that each AP advertises per channel and the number of access points that share the same channel. As can be seen in the figure, the amount of wasted airtime increases enormously for each SSID that the AP advertises (columns), and for each AP in the collision domain (rows) given by the channel used and the coverage area.

For a Wi-Fi network to work properly it is recommended that the saturation of airtime is not higher than 10% of the total airtime. For instance, when three access points share a channel and each access point advertises only one SSID per channel, the beacon frames occupy 9.67% of the total airtime. However, a typical situation in Wi-Fi networks occurs when three access points share the same channel and each access point advertises two SSIDs on said channel. It is also frequent that two access points share a channel and announce three SSIDs each. In both cases, highlighted in Figure 4, almost 20% of the total airtime is consumed by Beacon frames that are being continuously transmitted by the APs over the channel. This saturation of the airtime generates the following negative effects:
- Direct effect: By wasting almost a fifth of the total airtime, the QoS (Quality of Service) drops and the network performance deteriorates due to the high amount of airtime directly occupied by the Beacon frames.
- Indirect effect: Increases the probability of a collision produced by several devices transmitting at the same time. When several overlapping signals arrive at a receiver a collision occurs. In that case, the receiver discards the data received and the transmitters do not receive the acknowledgement frames (ACK) and need to resend their messages. Collisions may happen with any type of frame (management, data or control frame) that is occupying airtime.

To minimize these negative effects (network performance reduction and higher probability of collisions), it is advisable to reduce the saturation of airtime so that the highest amount of airtime is available for the data transmissions between stations and access points. The method 100 of Figure 1 achieves a reduction in the airtime saturation by compressing management frames 104 that are being transmitted over the Wi-Fi network. The method requires modifying the software of Wi-Fi transmitters and receivers (both access points and client devices) to carry out the compression and decompression of the frames in real time, with the aim of occupying the minimum airtime possible. These modifications may be carried out at low level (driver or firmware).

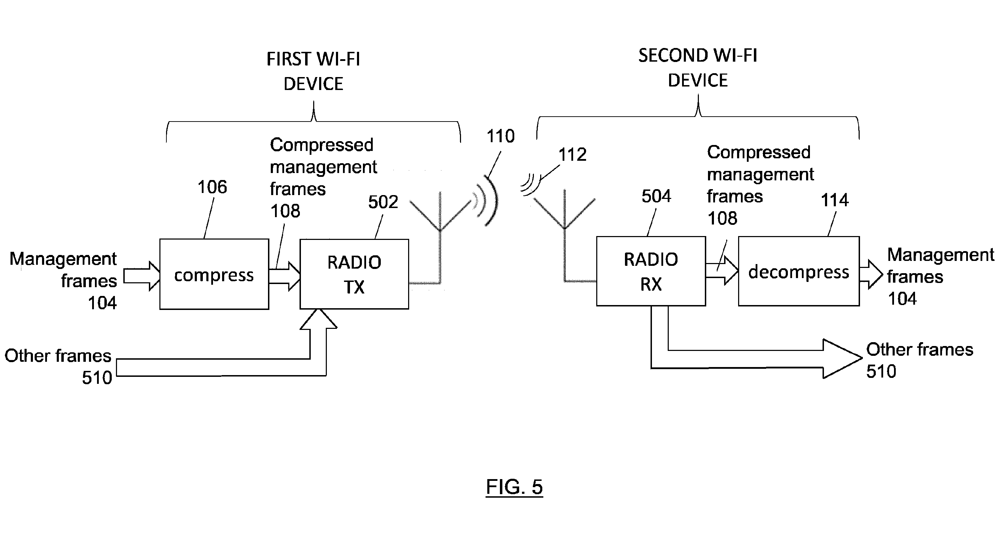

**Figure 5** shows the compression 106 of management frames 104 at a first Wi-Fi device, the transmission 110 of the compressed management frames 108 by a radio transmitter 502 of the first Wi-Fi device, the reception 112 of the compressed management frames 108 at a radio receiver 504 of a second Wi-Fi device, and the decompression 114 of the compressed management frames 108 at the second Wi-Fi device. The radio transmitter 502 of the first Wi-Fi device also receives and transmits other frames 510 that are not compressed (e.g. data frames, control frames, or other management frames). When the radio receiver 504 of the second Wi-Fi device receives these other uncompressed frames, the data is directly obtained by the second Wi-Fi device (it does not require decompression 114). When receiving data, the second Wi-Fi device only needs to check whether the received data is compressed or not to determine whether decompression 114 is to be applied or not.

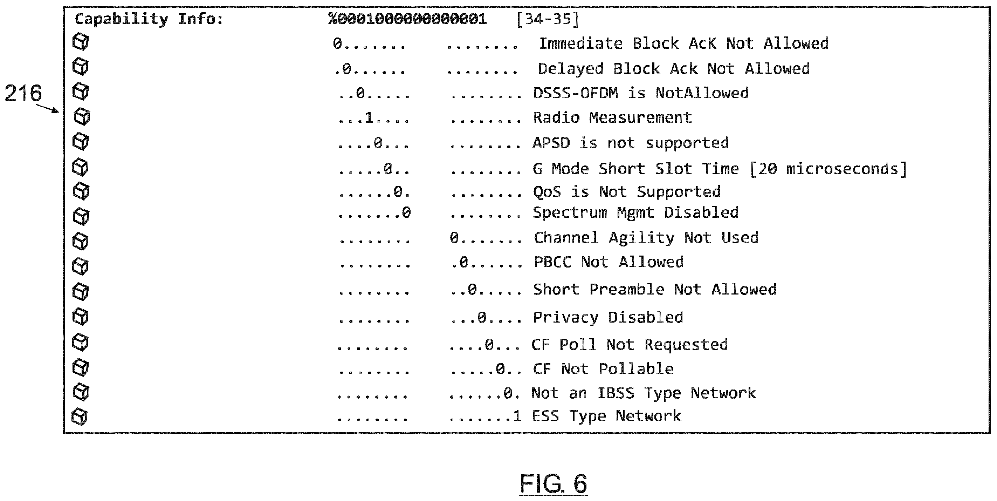

Many fields of the Beacon frame have low entropy, that is, they contain little information. Entropy marks the theoretical limit from which the information contained in a data set (such as a sequence of bits) can no longer be compressed. **Figure 6** shows an example of the sequence of bits ('0001000000000001') that form the capability information 216 field of a Beacon frame 200. This sequence of bits contains very little information since there is little uncertainty in the data (it is very likely that a random bit is 0). The Shannon entropy of this sequence is 1 bit/byte. The size of the sequence is 2 bytes, but it can be compressed to as little as 0.25 bytes. Therefore, the compressed sequence of bits could occupy 12.5% of its original size, so that 87.5% of the airtime could be saved with good compression.

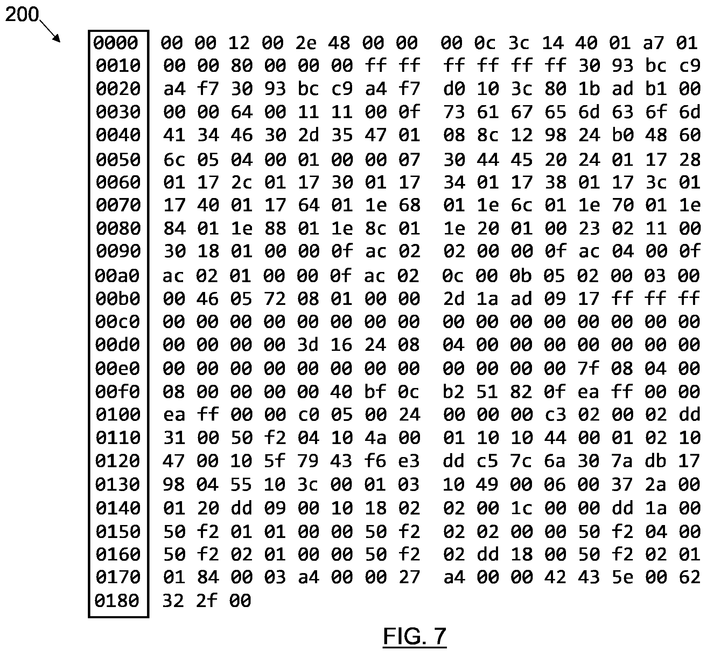

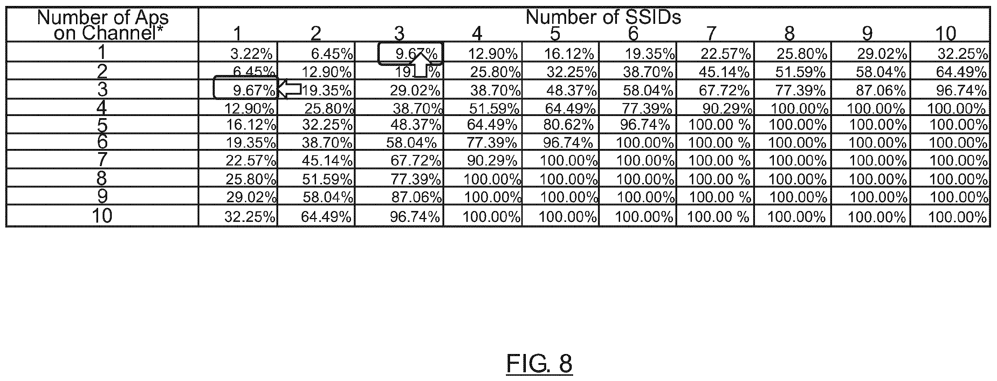

**Figure 7** depicts an example of the sequence of bytes (represented in hexadecimal format) that form a complete Beacon frame. The size of a Beacon frame is normally between 200 and 500 bytes. In the example, the Beacon frame is formed by 387 bytes and many sections of the frame have redundancy (for example, there are many consecutive '00' bytes). The Shannon entropy of this example is 5.07 bits/byte. This Beacon frame could be compressed down to 245.52 bytes, which is only 64.44% of the original size of 387 bytes. Therefore, 35.56% of the airtime originally occupied by the Beacon frame could be saved and used for other frames. In general, considering the compression capacity applied to Beacon frames, between 25% and 50% of the airtime could be saved as an average for most cases. Therefore, with the method of the present invention the airtime occupied by the beacon frames may be practically reduced by half. This means that in the table of Figure 4 the airtime occupied by the Beacon frames would move towards optimal areas (highlighted in **Figure 8****)** around 10% of the total airtime, where there is hardly any QoS degradation and the probability of collision is much lower.

The management frame may be fully compressed (i.e. the whole content of the frame) or partially compressed (only part of the frame, e.g. some particular fields of the frame, such as the tagged parameters) by the first Wi-Fi device.

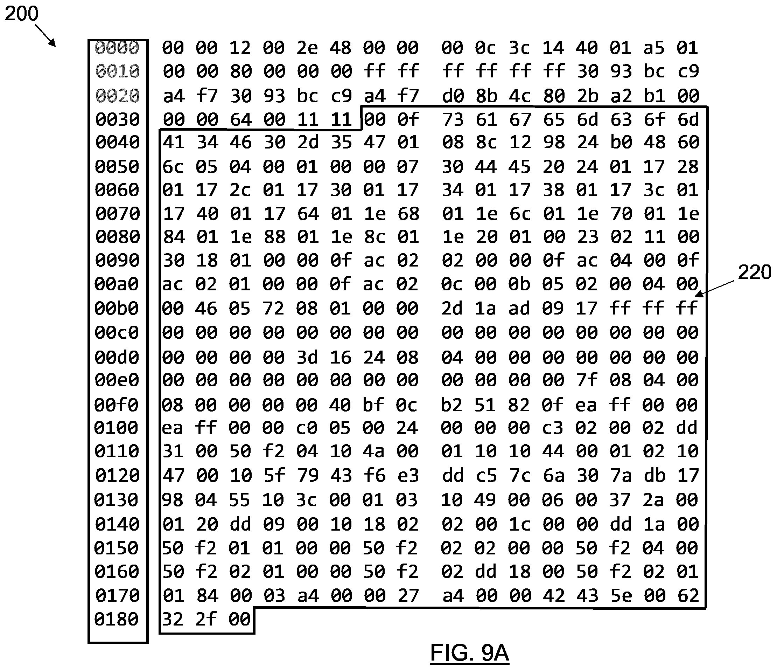

In some cases, certain fields of the management frame may be not compressed. In an embodiment, the MAC header of the management frame is not compressed and the frame body of the management frame is partially or fully compressed. For example, the first Wi-Fi device may compress only the tagged parameters 220 of the Beacon frame 200, highlighted in **Figure 9A****,** which occupy the vast majority of the length of the Beacon frame. In this case, the radio receiver 504 of the second Wi-Fi device would advantageously process the received Beacon frame 200 faster, since the MAC header 202 is not compressed and thus it would take less time to decode the MAC header 202 to determine the type of the frame received (e.g. that the data received is a Beacon frame) or to determine whether the frame is addressed or not to the device.

In another embodiment, the management frame is a Probe Request frame, the first Wi-Fi device is a station and the second Wi-Fi device is an access point. Probe Request frames are long messages sent by the stations when they are searching for Wi-Fi networks. Probe Request frames are sent from time to time by the stations. When there is a great deal of stations grouped around a certain area, such as a shopping center or a football stadium, there may be thousands of Probe Request frames sent per second by the multiple stations (e.g. smartphones), and these frames would occupy a significant percentage of the total airtime on the different Wi-Fi channels.

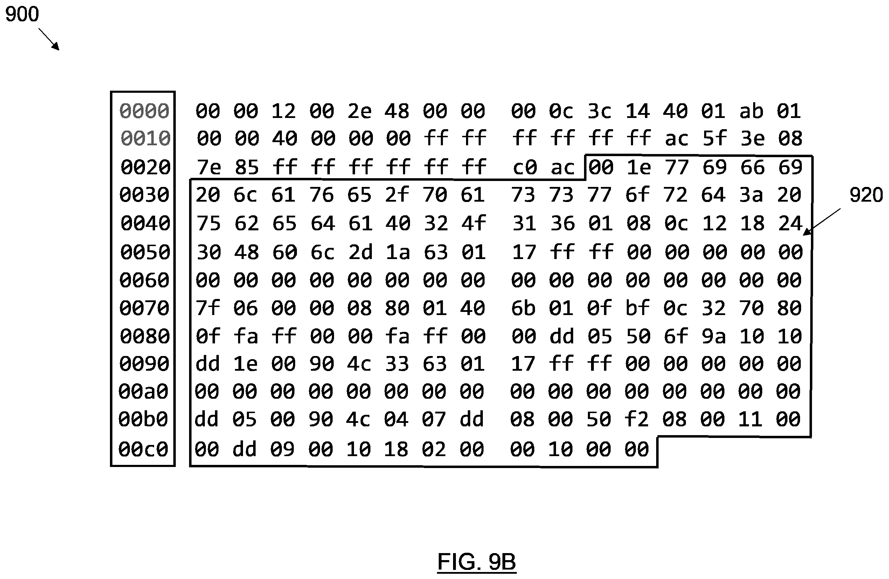

A Probe Request frame is somewhat smaller than a Beacon frame, with a size comprised between 100 and 250 bytes. In the Probe Request frame the device advertises its capabilities and everything the device can support, including many parameters such as the manufacturer of the chip, the device type, the driver, the operating system, etc. In the example of **Figure 9B****,** the Probe Request frame 900 has a size of 204 bytes which can be compressed down to as little as 117 bytes. In the image, the 162 bytes of the tagged parameters 920 of the frame body are marked, the tagged parameters 920 including a SSID field, a supported rates field, capabilities fields (HT capabilities, extended capabilities, VHT capabilities) and vendor-specific fields. The bytes above that are not highlighted correspond to the MAC header of the Probe Request frame and the fixed parameters.

The exemplary Probe Request frame 900 illustrated in Figure 9B has only 57.42% efficiency, with 42.58% of the airtime being wasted. The Shannon entropy in this case is 4.59 bits/byte. When the Probe Request frame is compressed, 42.58% of the airtime originally occupied by the frame is left free for other transmissions. In general, when compressing Probe Request frames, the observed percentage of airtime save is similar to that of the Beacon frame, between 25% and 50%.

In an environment with a high density of users, such as a concert, a football stadium or a demonstration, the Probe Request frames are flooding the Wi-Fi channels, with hundreds or thousands of these frames being transmitted per second. Although the Probe Request frames are normally not as long as the Beacon frames, due to the high number of Probe Request frames transmitted (especially when the Wi-Fi network is highly populated) they may have similar or even more negative impact in terms of QoS and collisions in the Wi-Fi networks.

Although the method may be applied to any management frame, the invention is especially useful when applied to either Beacon frames or Probe Request frames. The rest of the management frames are more sporadic and therefore the gain in airtime, when they are compressed, would be more marginal.

The management frame may be compressed (and later decompressed) using any known compression algorithm. However, to achieve higher efficiency for the type of sequences of bits used in these particular frames (Beacon or Probe Requests), the Huffman algorithm or the Lempel-Ziv-Welch compression algorithms are preferably selected, although other compression algorithms (e.g. Fano, Shannon, double-pass Huffman, etc) may also be used.

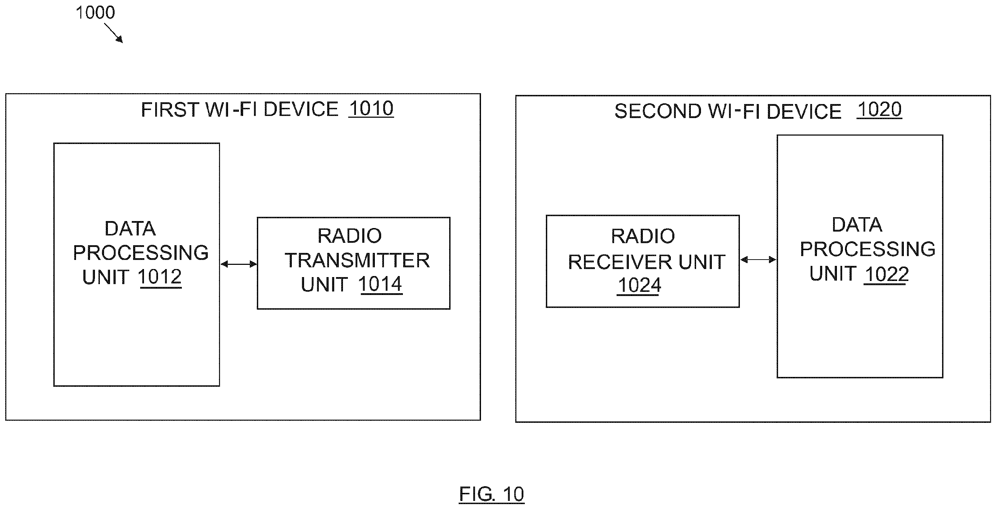

Another aspect of the present invention refers to a system for increasing available airtime in Wi-Fi networks. **Figure 10** depicts an embodiment of the system 1000, comprising a first Wi-Fi device 1010 and a second Wi-Fi device 1020, although the system 1000 may comprise a plurality of first Wi-Fi devices 1010 and/or a plurality of second Wi-Fi devices 1020.

Each first Wi-Fi device 1010 comprises a data processing unit 1012 and a radio transmitter unit 1014 (Wi-Fi interface). The data processing unit 1012 is configured to generate a management frame and compress the management frame. The radio transmitter unit 1014 is configured to transmit or broadcast the compressed management frame.

Each second Wi-Fi device 1020 comprises a radio receiver unit 1024 configured to receive the compressed management frame, and a data processing unit 1022 configured to decompress the compressed management frame to obtain the original management frame generated by the first Wi-Fi device 1010.

In an embodiment, each first Wi-Fi device 1010 is an access point, each second Wi-Fi device 1020 is a station (or client device, such as a smartphone, able to connect to a Wi-Fi network generated by an access point), and the management frame 104 is a Beacon frame.

According to another embodiment, each first Wi-Fi device 1010 is a station, each second Wi-Fi device 1020 is an access point, and the management frame 104 is a Probe Request frame.

The radio transmitter unit 1014 of the first Wi-Fi device 1010 may be a transceiver (i.e. an electronic unit that is both transmitter and receiver). Similarly, the radio receiver unit 1024 of the second Wi-Fi device 1020 may also be a transceiver.

The data processing unit 1012 of the first Wi-Fi device 1010 may be configured to fully compress the management frame. Alternatively, the data processing unit 1012 of the first Wi-Fi device 1010 may be configured to partially compress the management frame. For instance, the data processing unit 1012 of the first Wi-Fi device 1010 may be configured to compress, at least partially, the frame body of the management frame and leave the MAC header of the management frame uncompressed.

## Claims

1. A method for increasing available airtime in Wi-Fi networks, the method (100) comprising:
generating (102), by a first Wi-Fi device (1010), a management frame (104), wherein the management frame (104) is an IEEE 802.11 Beacon frame (200) or an IEEE 802.11 Probe Request frame (900);
compressing (106), by the first Wi-Fi device (1010), the management frame (104) to obtain a compressed management frame (108);
wirelessly broadcasting (110), by the first Wi-Fi device (1010), the compressed management frame (108);
receiving (112), at a second Wi-Fi device (1020), the compressed management frame (108); and
decompressing (114), by the second Wi-Fi device (1020), the compressed management frame (108) to obtain the management frame (104) generated by the first Wi-Fi device (1010).

2. The method according to claim 1, wherein the management frame (104) is a Beacon frame (200), the first Wi-Fi device (1010) is an access point, and the second Wi-Fi device (1020) is a station.

3. The method according to claim 1, wherein the management frame (104) is a Probe Request frame (900), the first Wi-Fi device (1010) is a station, and the second Wi-Fi device (1020) is an access point.

4. The method according to any of preceding claims, wherein the management frame (104) is partially compressed.

5. The method according to claim 4, wherein the MAC header (202) of the management frame (104) is not compressed and the frame body (204) of the management frame (104) is at least partially compressed.

6. A system for increasing available airtime in Wi-Fi networks, the system (1000) comprising:
at least one first Wi-Fi device (1010), each first Wi-Fi device (1010) comprising:
a data processing unit (1012) configured to:
generate (102) a management frame (104), wherein the management frame (104) is an IEEE 802.11 Beacon frame (200) or an IEEE 802.11 Probe Request frame (900); and
compress (106) the management frame (104) to obtain a compressed management frame (108); and
a radio transmitter unit (1014) configured to broadcast (110) the compressed management frame (108); and
at least one second Wi-Fi device (1020), each second Wi-Fi device (1020) comprising:
a radio receiver unit (1024) configured to receive (112) the compressed management frame (108); and
a data processing unit (1022) configured to decompress (114) the compressed management frame (108) to obtain the management frame (104) generated by the first Wi-Fi device (1010).

7. The system according to claim 6, wherein each first Wi-Fi device (1010) is an access point, each second Wi-Fi device (1020) is a station, and the management frame (104) is a Beacon frame (200).

8. The system according to claim 6, wherein each first Wi-Fi device (1010) is a station, each second Wi-Fi device (1020) is an access point, and the management frame (104) is a Probe Request frame (900).

9. The system according to any of claims 6 to 8, wherein the data processing unit (1012) of the first Wi-Fi device (1010) is configured to fully compress the management frame (104).

10. The system according to any of claims 6 to 8, wherein the data processing unit (1012) of the first Wi-Fi device (1010) is configured to partially compress the management frame (104).

11. The system according to claim 10, wherein the data processing unit (1012) of the first Wi-Fi device (1010) is configured to compress (106), at least partially, the frame body (204) of the management frame (104) and leave the MAC header (202) of the management frame (104) uncompressed.

12. A Wi-Fi transmitter device for increasing available airtime in Wi-Fi networks, the Wi-Fi transmitter device (1010) comprising:
a data processing unit (1012) configured to:
generate (102) an IEEE 802.11 management frame (104), wherein the management frame (104) is an IEEE 802.11 Beacon frame (200) or an IEEE 802.11 Probe Request frame (900); and
compress (106) the management frame (104) to obtain a compressed management frame (108); and
a radio transmitter unit (1014) configured to broadcast (110) the compressed management frame (108).

13. A Wi-Fi receiver device for increasing available airtime in Wi-Fi networks, the Wi-Fi receiver device (1020) comprising:
a radio receiver unit (1024) configured to receive (112) a compressed management frame (108) from a Wi-Fi transmitter device (1010); and
a data processing unit (1022) configured to decompress (114) the compressed management frame (108) to obtain an IEEE 802.11 management frame (104), wherein the management frame (104) is an IEEE 802.11 Beacon frame (200) or an IEEE 802.11 Probe Request frame (900).

14. A computer program product comprising instructions which, when the program is executed by a first processor, cause the first processor to generate (102) an IEEE 802.11 management frame (104), wherein the management frame (104) is an IEEE 802.11 Beacon frame (200) or an IEEE 802.11 Probe Request frame (900), compress (106) the management frame (104) to obtain a compressed management frame (108), and broadcast (110) the compressed management frame (108) to a second processor.

15. A computer program product comprising instructions which, when the program is executed by a second processor, cause the second processor to receive (112) a compressed management frame (108) from a first processor and decompress (114) the compressed management frame (108) to obtain an IEEE 802.11 management frame (104), wherein the management frame (104) is an IEEE 802.11 Beacon frame (200) or an IEEE 802.11 Probe Request frame (900).

## Patentansprüche

1. Verfahren zur Erhöhung der verfügbaren Funkzeit in Wi-Fi-Netzwerken, wobei das Verfahren (100) Folgendes umfasst:
Generieren (102), durch eine erste Wi-Fi-Vorrichtung (1010), eines Verwaltungsrahmens (104), wobei der Verwaltungsrahmen (104) ein IEEE 802.11-Beacon-Rahmen (200) oder ein IEEE 802.11-Probe-Request-Rahmen (900) ist;
Komprimieren (106), durch die erste Wi-Fi-Vorrichtung (1010), des Verwaltungsrahmens (104), um einen komprimierten Verwaltungsrahmen (108) zu erhalten;
drahtloses Aussenden (110) des komprimierten Verwaltungsrahmens (108) durch die erste Wi-Fi-Vorrichtung (1010);
Empfangen (112) des komprimierten Verwaltungsrahmens (108) an einer zweiten Wi-Fi-Vorrichtung (1020); und
Dekomprimieren (114), durch die zweite Wi-Fi-Vorrichtung (1020), des komprimierten Verwaltungsrahmens (108), um den von der ersten Wi-Fi-Vorrichtung (1010) generierten Verwaltungsrahmen (104) zu erhalten.

2. Verfahren nach Anspruch 1, wobei der Verwaltungsrahmen (104) ein Beacon-Rahmen (200) ist, die erste Wi-Fi-Vorrichtung (1010) ein Zugangspunkt ist und die zweite Wi-Fi-Vorrichtung (1020) eine Station ist.

3. Verfahren nach Anspruch 1, wobei der Verwaltungsrahmen (104) ein Probe-Request-Rahmen (900) ist, die erste Wi-Fi-Vorrichtung (1010) eine Station ist und die zweite Wi-Fi-Vorrichtung (1020) ein Zugangspunkt ist.

4. Verfahren nach einem der vorhergehenden Ansprüche, wobei der Verwaltungsrahmen (104) teilweise komprimiert ist.

5. Verfahren nach Anspruch 4, wobei der MAC-Header (202) des Verwaltungsrahmens (104) nicht komprimiert ist und der Rahmenkörper (204) des Verwaltungsrahmens (104) mindestens teilweise komprimiert ist.

6. System zur Erhöhung der verfügbaren Funkzeit in Wi-Fi-Netzwerken, wobei das System (1000) Folgendes umfasst:
mindestens eine erste Wi-Fi-Vorrichtung (1010), wobei jede erste Wi-Fi-Vorrichtung (1010) Folgendes umfasst:
eine Datenverarbeitungseinheit (1012), die zu Folgendem konfiguriert ist:
Generieren (102) eines Verwaltungsrahmens (104), wobei der Verwaltungsrahmen (104) ein IEEE 802.11-Beacon-Rahmen (200) oder ein IEEE 802.11-Probe-Request-Rahmen (900) ist; und
Komprimieren (106) des Verwaltungsrahmens (104), um einen komprimierten Verwaltungsrahmen (108) zu erhalten; und
eine Funkübertragungseinheit (1014), die dazu konfiguriert ist, den komprimierten Verwaltungsrahmen (108) auszusenden (110); und
mindestens eine zweite Wi-Fi-Vorrichtung (1020), wobei jede zweite Wi-Fi-Vorrichtung (1020) Folgendes umfasst:
eine Funkempfängereinheit (1024), die dazu konfiguriert ist, den komprimierten Verwaltungsrahmen (108) zu empfangen (112); und
eine Datenverarbeitungseinheit (1022), die dazu konfiguriert ist, den komprimierten Verwaltungsrahmen (108) zu dekomprimieren (114), um den von der ersten Wi-Fi-Vorrichtung (1010) generierten Verwaltungsrahmen (104) zu erhalten.

7. System nach Anspruch 6, wobei jede erste Wi-Fi-Vorrichtung (1010) ein Zugangspunkt ist, jede zweite Wi-Fi-Vorrichtung (1020) eine Station ist, und der Verwaltungsrahmen (104) ein Beacon-Rahmen (200) ist.

8. System nach Anspruch 6, wobei jede erste Wi-Fi-Vorrichtung (1010) eine Station ist, jede zweite Wi-Fi-Vorrichtung (1020) ein Zugangspunkt ist, und der Verwaltungsrahmen (104) ein Probe-Request-Rahmen (900) ist.

9. System nach einem der Ansprüche 6 bis 8, wobei die Datenverarbeitungseinheit (1012) der ersten Wi-Fi-Vorrichtung (1010) dazu konfiguriert ist, den Verwaltungsrahmen (104) vollständig zu komprimieren.

10. System nach einem der Ansprüche 6 bis 8, wobei die Datenverarbeitungseinheit (1012) der ersten Wi-Fi-Vorrichtung (1010) dazu konfiguriert ist, den Verwaltungsrahmen (104) teilweise zu komprimieren.

11. System nach Anspruch 10, wobei die Datenverarbeitungseinheit (1012) der ersten WiFi-Vorrichtung (1010) dazu konfiguriert ist, mindestens teilweise den Rahmenkörper (204) des Verwaltungsrahmens (104) zu komprimieren (106) und den MAC-Header (202) des Verwaltungsrahmens (104) unkomprimiert zu lassen.

12. Wi-Fi-Übertragungsvorrichtung zur Erhöhung der verfügbaren Funkzeit in Wi-Fi-Netzwerken, wobei die Wi-Fi-Übertragungsvorrichtung (1010) Folgendes umfasst:
eine Datenverarbeitungseinheit (1012), die zu Folgendem konfiguriert ist:
Generieren (102) eines IEEE 802.11-Verwaltungsrahmens (104), wobei der Verwaltungsrahmen (104) ein IEEE 802.11-Beacon-Rahmen (200) oder ein IEEE 802.11-Probe-Request-Rahmen (900) ist; und
Komprimieren (106) des Verwaltungsrahmens (104), um einen komprimierten Verwaltungsrahmen (108) zu erhalten; und
eine Funkübertragungseinheit (1014), die dazu konfiguriert ist, den komprimierten Verwaltungsrahmen (108) auszusenden (110).

13. Wi-Fi-Empfangsvorrichtung zur Erhöhung der verfügbaren Funkzeit in Wi-Fi-Netzwerken, wobei die Wi-Fi-Empfangsvorrichtung (1020) Folgendes umfasst:
eine Funkempfängereinheit (1024), die dazu konfiguriert ist, einen komprimierten Verwaltungsrahmen (108) von einer Wi-Fi-Übertragungsvorrichtung (1010) zu empfangen (112); und
eine Datenverarbeitungseinheit (1022), die dazu konfiguriert ist, den komprimierten Verwaltungsrahmen (108) zu dekomprimieren (114), um einen IEEE 802.11-Verwaltungsrahmen (104) zu erhalten, wobei der Verwaltungsrahmen (104) ein IEEE 802.11-Beacon-Rahmen (200) oder ein IEEE 802.11-Probe-Request-Rahmen (900) ist.

14. Computerprogrammprodukt, umfassend Anweisungen, die, wenn das Programm von einem ersten Prozessor ausgeführt wird, den ersten Prozessor veranlassen, einen IEEE 802.11-Verwaltungsrahmen (104) zu generieren (102), wobei der Verwaltungsrahmen (104) ein IEEE 802.11-Beacon-Rahmen (200) oder ein IEEE 802.11-Probe-Request-Rahmen (900) ist, den Verwaltungsrahmen (104) zu komprimieren (106), um einen komprimierten Verwaltungsrahmen (108) zu erhalten, und den komprimierten Verwaltungsrahmen (108) an einen zweiten Prozessor auszusenden (110).

15. Computerprogrammprodukt, umfassend Anweisungen, die, wenn das Programm von einem zweiten Prozessor ausgeführt wird, den zweiten Prozessor veranlassen, einen komprimierten Verwaltungsrahmen (108) von einem ersten Prozessor zu empfangen (112) und den komprimierten Verwaltungsrahmen (108) zu dekomprimieren (114), um einen IEEE 802.11-Verwaltungsrahmen (104) zu erhalten, wobei der Verwaltungsrahmen (104) ein IEEE 802.11-Beacon-Rahmen (200) oder ein IEEE 802.11-Probe-Request-Rahmen (900) ist.

## Revendications

1. Procédé d'augmentation du temps d'antenne disponible dans des réseaux Wi-Fi, ledit procédé (100) comprenant :
génération (102), par un premier dispositif Wi-Fi (1010), d'une trame de gestion (104), ladite trame de gestion (104) étant une trame Beacon IEEE 802.11 (200) ou une trame Probe Request IEEE 802.11 (900) ;
compression (106) de la trame de gestion (104) par le premier dispositif Wi-Fi (1010), afin d'obtenir une trame de gestion compressée (108) ;
diffusion sans fil (110) de la trame de gestion compressée (108), par le premier dispositif Wi-Fi (1010);
réception (112), de la trame de gestion compressée (108) au niveau d'un second dispositif Wi-Fi (1020); et
décompression (114) de la trame de gestion compressée (108), par le second dispositif Wi-Fi (1020), afin d'obtenir la trame de gestion (104) générée par le premier dispositif Wi-Fi (1010).

2. Procédé selon la revendication 1, dans lequel la trame de gestion (104) est une trame Beacon (200), le premier dispositif Wi-Fi (1010) est un point d'accès, et le second dispositif Wi-Fi (1020) est une station.

3. Procédé selon la revendication 1, dans lequel la trame de gestion (104) est une trame Probe Request (900), le premier dispositif Wi-Fi (1010) est une station, et le second dispositif Wi-Fi (1020) est un point d'accès.

4. Procédé selon l'une quelconque des revendications précédentes, dans lequel la trame de gestion (104) est partiellement compressée.

5. Procédé selon la revendication 4, dans lequel l'en-tête MAC (202) de la trame de gestion (104) n'est pas compressé et le corps de trame (204) de la trame de gestion (104) est au moins partiellement compressé.

6. Système d'augmentation du temps d'antenne disponible dans des réseaux Wi-Fi, ledit système (1000) comprenant :
au moins un premier dispositif Wi-Fi (1010), chaque premier dispositif Wi-Fi (1010) comprenant :
une unité de traitement de données (1012) configurée pour :
générer (102) une trame de gestion (104), ladite trame de gestion (104) étant une trame Beacon IEEE 802.11 (200) ou une trame Probe Request IEEE 802.11 (900) ; et
compresser (106) la trame de gestion (104) afin d'obtenir une trame de gestion compressée (108) ; et
une unité d'émission radio (1014) configurée pour diffuser (110) la trame de gestion compressée (108) ; et
au moins un second dispositif Wi-Fi (1020), chaque second dispositif Wi-Fi (1020) comprenant :
une unité de réception radio (1024) configurée pour recevoir (112) la trame de gestion compressée (108) ; et
une unité de traitement de données (1022) configurée pour décompresser (114) la trame de gestion compressée (108) afin d'obtenir la trame de gestion (104) générée par le premier dispositif Wi-Fi (1010).

7. Système selon la revendication 6, dans lequel chaque premier dispositif Wi-Fi (1010) est un point d'accès, chaque second dispositif Wi-Fi (1020) est une station, et la trame de gestion (104) est une trame Beacon (200).

8. Système selon la revendication 6, dans lequel chaque premier dispositif Wi-Fi (1010) est une station, chaque second dispositif Wi-Fi (1020) est un point d'accès, et la trame de gestion (104) est une trame Probe Request (900).

9. Système selon l'une quelconque des revendications 6 à 8, dans lequel l'unité de traitement de données (1012) du premier dispositif Wi-Fi (1010) est configurée pour compresser intégralement la trame de gestion (104).

10. Système selon l'une quelconque des revendications 6 à 8, dans lequel l'unité de traitement de données (1012) du premier dispositif Wi-Fi (1010) est configurée pour compresser partiellement la trame de gestion (104).

11. Système selon la revendication 10, dans lequel l'unité de traitement de données (1012) du premier dispositif Wi-Fi (1010) est configurée pour compresser (106), au moins partiellement, le corps de trame (204) de la trame de gestion (104) et laisser l'en-tête MAC (202) de la trame de gestion (104) non compressé.

12. Dispositif émetteur Wi-Fi destiné à augmenter le temps d'antenne disponible dans des réseaux Wi-Fi, ledit dispositif émetteur Wi-Fi (1010) comprenant :
une unité de traitement de données (1012) configurée pour :
générer (102) une trame de gestion IEEE 802.11 (104), ladite trame de gestion (104) étant une trame Beacon IEEE 802.11 (200) ou une trame Probe Request IEEE 802.11 (900) ; et
compresser (106) la trame de gestion (104) afin d'obtenir une trame de gestion compressée (108) ; et
une unité d'émission radio (1014) configurée pour diffuser (110) la trame de gestion compressée (108).

13. Dispositif récepteur Wi-Fi destiné à augmenter le temps d'antenne disponible dans des réseaux Wi-Fi, ledit dispositif récepteur Wi-Fi (1020) comprenant :
une unité de réception radio (1024) configurée pour recevoir (112) une trame de gestion compressée (108) depuis un dispositif émetteur Wi-Fi (1010) ; et
une unité de traitement de données (1022) configurée pour décompresser (114) la trame de gestion compressée (108) afin d'obtenir une trame de gestion IEEE 802.11 (104), ladite trame de gestion (104) étant une trame Beacon IEEE 802.11 (200) ou une trame Probe Request IEEE 802.11 (900).

14. Produit programme d'ordinateur comprenant des instructions qui, lorsqu'elles sont exécutées par un premier processeur, amènent ledit premier processeur à générer (102) une trame de gestion IEEE 802.11 (104), ladite trame de gestion (104) étant une trame Beacon IEEE 802.11 (200) ou une trame Probe Request IEEE 802.11 (900), à compresser (106) la trame de gestion (104) afin d'obtenir une trame de gestion compressée (108), et à diffuser (110) la trame de gestion compressée (108) vers un second processeur.

15. Produit programme d'ordinateur comprenant des instructions qui, lorsqu'elles sont exécutées par un second processeur, amènent ledit second processeur à recevoir (112) une trame de gestion compressée (108) depuis un premier processeur et à décompresser (114) ladite trame de gestion compressée (108) afin d'obtenir une trame de gestion IEEE 802.11 (104), ladite trame de gestion (104) étant une trame Beacon IEEE 802.11 (200) ou une trame Probe Request IEEE 802.11 (900).
